# EUROPÄISCHE PATENTANMELDUNG

(11) **EP 3 432 097 A1**
(43) Veröffentlichungstag der Anmeldung: **23.01.2019**
(21) Anmeldenummer: 17182304.0
(22) Anmeldetag: 20.07.2017
(51) Int. Cl.: G05B 19/042, G05B 19/05, H04L 29/08, H04L 12/801, H04L 12/931, G05B 19/418

(54) **SUMMENSTREAMS FÜR ISTZUSTÄNDE UND STEUERSIGNALE EINES VERTEILTEN STEUERUNGSSYSTEMS**

(71) Anmelder: Siemens Aktiengesellschaft, 80333 München (DE)
(72) Erfinder: Chen, Feng, 90537 Feucht (DE); Götz, Franz-Josef, 91180 Heideck (DE); Kießling, Marcel, 91235 Velden (DE); Nguyen, An Ninh, 90427 Nürnberg (DE); Schmitt, Jürgen, 90766 Fürth (DE)

(57) **Zusammenfassung**

Sensoren (1) eines Steuerungssystems erfassen zyklisch Istzustände (Z) eines industriellen technischen Prozesses (4) und übermitteln sie über eine den Sensoren (1) gemeinsame erste geschützte Verbindung (6) eines ersten offenen Kommunikationsnetzes (5) an eine gemeinsame Zentraleinheit (3) des Steuerungssystems. Dadurch übermittelt innerhalb eines vorbestimmten Zeitfensters (T) jeder Sensor (1) die von ihm erfassten Istzustände (Z) einmal an die Zentraleinheit (3). Die Zentraleinheit (3) ermittelt unter Berücksichtigung der an sie übermittelten Istzustände (Z) zyklisch Steuersignale (C) für den industriellen technischen Prozess (4) und übermittelt sie über eine mehreren Aktoren (2) des Steuerungssystems gemeinsame zweite geschützte Verbindung (9) eines zweiten offenen Kommunikationsnetzes (8) an die Aktoren (2). Die Zentraleinheit (3) übermittelt dadurch innerhalb des vorbestimmten Zeitfensters (T) an jeden Aktor (2) einmal die für den jeweiligen Aktor (2) bestimmten Steuersignale (C). Die Aktoren (2) wirken zyklisch entsprechend den an sie übermittelten Steuersignalen (C) auf den industriellen technischen Prozess (4) ein. Zur Vermeidung von zeitlichen Konflikten bei der Übermittlung der Istzustände (Z) an die Zentraleinheit (3) ist jedem Sensor (1) innerhalb des Zeitfensters (T) ein jeweiliger senderseitiger Teilbereich (19) zugeordnet, innerhalb dessen der jeweilige Sensor (19) die von ihm erfassten Istzustände (Z) dem ersten offenen Kommunikationsnetz (5) zuführt.

## Beschreibung

Die vorliegende Erfindung geht aus von einem Steuerverfahren für einen industriellen technischen Prozess,
- wobei Sensoren eines Steuerungssystems zyklisch Istzustände des industriellen technischen Prozesses erfassen und an eine gemeinsame Zentraleinheit des Steuerungssystems übermitteln, so dass innerhalb eines vorbestimmten Zeitfensters jeder Sensor die von ihm erfassten Istzustände einmal an die gemeinsame Zentraleinheit übermittelt,
- wobei die gemeinsame Zentraleinheit unter Berücksichtigung der an sie übermittelten Istzustände zyklisch Steuersignale für den industriellen technischen Prozess ermittelt und an Aktoren des Steuerungssystems übermittelt, so dass die gemeinsame Zentraleinheit innerhalb des vorbestimmten Zeitfensters an jeden Aktor einmal die für den jeweiligen Aktor bestimmten Steuersignale übermittelt,
- wobei die Aktoren zyklisch entsprechend den an sie übermittelten Steuersignalen auf den industriellen technischen Prozess einwirken.

Die vorliegende Erfindung geht weiterhin aus von einem Steuerungssystem für einen industriellen technischen Prozess,
- wobei das Steuerungssystem eine Mehrzahl von Sensoren, eine Mehrzahl von Aktoren und eine gemeinsame Zentraleinheit aufweist.

Steuerungssysteme sind in verschiedenen Ausgestaltungen bekannt. Historisch wurden die Steuerungssysteme zunächst mit eigenständigen Kommunikationssystemen aufgebaut, beispielsweise einem eigenen Bus einer speicherprogrammierbaren Steuerung. Weiterentwicklungen führten sodann zu Feldbus-Systemen, bei denen die Sensoren und die Aktoren über einen Feldbus - beispielsweise den PROFIBUS - mit der gemeinsamen Zentraleinheit verbunden sind.

In jüngerer Zeit werden auch Feldbusse verwendet, die auf Ethernet-Basis arbeiten. Ein derartiger Feldbus ist ein typisches Beispiel eines offenen Kommunikationsnetzes.

Ein offenes Kommunikationsnetz ist ein Kommunikationsnetz, bei dem jede an das Kommunikationsnetz angeschlossene Komponente entsprechend ihren eigenen Vorgaben Daten in das Kommunikationsnetz einspeist und über das Kommunikationsnetz übertragene Daten mitliest. Hingegen ist den angeschlossenen Komponenten nicht bekannt, welche anderen Komponenten an das Kommunikationsnetz angeschlossen sind. Insbesondere können somit an ein offenes Kommunikationsnetz, das im Rahmen der vorliegenden Erfindung eingesetzt wird, auch weitere Komponenten angeschlossen sein, die nichts mit der Steuerung zu tun haben. Wenn - rein beispielhaft - an das Kommunikationsnetz als Komponenten die Zentraleinheit, die Sensoren und die Aktoren angeschlossen sind, können zusätzliche Komponenten vorhanden sein, die miteinander, aber mit weder mit der Zentraleinheit noch den Sensoren noch den Aktoren kommunizieren oder zwar mit mindestens einer dieser Komponenten kommunizieren, aber nicht innerhalb des Steuerverfahrens. Weiterhin ist den angeschlossenen Komponenten - zumindest in der Regel - nicht die Topologie des offenen Kommunikationsnetzes bekannt.

In der Prozessindustrie und der industriellen Automatisierung sind die zu regelnden industriellen technischen Prozesse meist relativ träge. Zykluszeiten - in der Terminologie der vorliegenden Erfindung "Zeitfenster" - können im Bereich von etlichen Millisekunden liegen, oftmals sogar im Bereich oberhalb von 50 ms oder 100 ms. Für derartige Zykluszeiten kann in der Regel auch ein auf Ethernet basierendes Kommunikationsnetz verwendet werden.

Im Rahmen der Übertragung von audiovisuellen Datenströmen sind im Stand der Technik für offene Kommunikationsnetze speziell geschützte Verbindungen bekannt, sogenannte Streams. Ein Stream ist eine Verbindung zwischen einer ersten Komponente und einer zweiten Komponente, die beide an das offene Kommunikationsnetz angeschlossen sind. Bei einem Stream wird gewährleistet, dass an der ersten Komponente - dem sogenannten Talker - eingespeiste Daten mit einer maximalen, vorab bekannten Verzögerung bei der zweiten Komponente - dem sogenannten Listener - eintreffen. Die maximale Verzögerung ist abhängig von den Leitungsabschnitten und den einzelnen Knotenpunkten zwischen aufeinanderfolgenden Leitungsabschnitten von der ersten zur zweiten Komponente. Die maximale Verzögerung wird beim Einrichten des Streams festgelegt.

Die für die audiovisuelle Übertragung von Daten bekannten Maßnahmen können prinzipiell auch im industriellen Umfeld angewendet werden. Es besteht jedoch ein wichtiger Unterschied zwischen audiovisuellen Daten und industriellen Daten. Bei audiovisuellen Daten müssen meist große Datenmengen von genau einem Talker zu genau einem Listener übertragen werden. Bei industriellen Anwendungen hingegen sind zunächst die zu übertragenden Datenmengen bereits erheblich kleiner. Meist müssen pro Zyklus nur einige Byte, maximal einige kByte, übertragen werden. Weiterhin sind bei industriellen Anwendungen nicht nur zwei Komponenten an der Kommunikation beteiligt, sondern viele Komponenten. Insbesondere ist für die Übermittlung der Istzustände jeder Sensor ein Talker, während die Zentraleinheit hierfür ein Listener ist. Umgekehrt ist für die Übermittlung der Steuersignale die Zentraleinheit ein Talker, während jeder Aktor ein Listener ist.

Wenn die aus der audiovisuellen Übertragung von Daten bekannten Maßnahmen direkt und unmittelbar übernommen würden, müssten eine Vielzahl von Streams eingerichtet werden, nämlich für jeden Sensor und jeden Aktor jeweils ein eigener Stream, wobei bei den Sensoren der jeweilige Sensor der Talker und die Zentraleinheit der Listener ist und bei den Aktoren die Zentraleinheit der Talker und jeder Aktor ein Listener ist. Jeder Stream belegt bei jedem Knotenpunkt des Kommunikationsnetzes, über den der Stream geleitet wird, erhebliche Ressourcen. Dieser Ansatz erweist sich daher als zwar prinzipiell möglich, aber nicht praktikabel.

Im Stand der Technik werden die Daten von Steuerungssystemen (also die von den Sensoren erfassten Istzustände und die an die Aktoren zu übermittelnden Steuersignale bzw. allgemein das Prozessabbild) daher ohne weitergehenden Schutz übertragen. Bei der Übertragung wird eine hohe Priorität gewählt und eine grobe Abschätzung der hierfür erforderlichen Bandbreite durchgeführt.

Soweit es die von der gemeinsamen Zentraleinheit an die Aktoren zu übermittelnden Steuersignale betrifft, ist die Vorgehensweise des Standes der Technik relativ problemlos. Insbesondere kann auf Seiten der gemeinsamen Zentraleinheit auf relativ einfache Weise gewährleistet werden, dass die Steuersignale für die Aktoren sequenziell nacheinander in das offene Kommunikationsnetz eingespeist werden. Die Sensoren speisen ihre Istzustände jedoch unkoordiniert in das offene Kommunikationsnetz ein. In dem Kommunikationsnetz können daher "Schwebungen" auftreten. Eine Schwebung tritt auf, wenn mehrere Sensoren ihre Istzustände derart in das Kommunikationsnetz einspeisen, dass bei der Zentraleinheit oder an einem der Knotenpunkte eine kurzzeitige Überlastung auftritt. Aufgrund der Überlastung können von der Zentraleinheit bzw. in dem betroffenen Knotenpunkt die Daten eines der betreffenden Sensoren nicht gepuffert werden, so dass es zu einem Datenverlust kommt. Ein derartiger Datenverlust führt in der Regel zu einer Störung des Steuerungsprozesses als solchem.

Auch andere Ereignisse können den Steuerungsprozess beeinflussen. Beispielsweise kann sich aufgrund einer anderen, nicht mit dem Steuerungsprozess als solchem zusammenhängenden Kommunikation die Latenzzeit einzelner Knotenpunkte verändern. Auch dies kann zu einer kurzzeitigen Überlastung eines Knotenpunkts führen.

Mit der Einrichtung von Streams zwischen den beteiligten Komponenten (Sensoren, gemeinsame Zentraleinheit, Aktoren) könnten derartige Probleme vermieden werden. Die Einrichtung von Streams zwischen jeweils nur zwei Komponenten, wie sie standardmäßig der Fall ist, ist jedoch inpraktikabel.

Die Aufgabe der vorliegenden Erfindung besteht darin, Möglichkeiten zu schaffen, mit vernünftigem Aufwand eine geschützte Kommunikation zwischen den beteiligten Komponenten zu realisieren.

Die Aufgabe wird durch Steuerverfahren mit den Merkmalen des Anspruchs 1 gelöst. Vorteilhafte Ausgestaltungen des Steuerverfahrens sind Gegenstand der abhängigen Ansprüche 2 bis 5.

Erfindungsgemäß wird ein Steuerverfahren der eingangs genannten Art dadurch ausgestaltet,
- dass die Sensoren die Istzustände über eine den Sensoren gemeinsame erste geschützte Verbindung eines ersten offenen Kommunikationsnetzes an die gemeinsame Zentraleinheit übermitteln,
- dass die gemeinsame Zentraleinheit die Istzustände über eine den Aktoren gemeinsame zweite geschützte Verbindung eines zweiten offenen Kommunikationsnetzes an die Aktoren übermittelt und
- dass zur Vermeidung von zeitlichen Konflikten bei der Übermittlung der Istzustände an die gemeinsame Zentraleinheit jedem Sensor innerhalb des Zeitfensters ein jeweiliger senderseitiger Teilbereich zugeordnet ist, innerhalb dessen der jeweilige Sensor die von ihm erfassten Istzustände dem ersten offenen Kommunikationsnetz zuführt.

Erfindungsgemäß werden also insgesamt nur zwei geschützte Verbindungen eingerichtet, nämlich zum einen die erste geschützte Verbindung zwischen den Sensoren und der gemeinsamen Zentraleinheit und zum anderen die zweite geschützte Verbindung zwischen der gemeinsamen Zentraleinheit und den Aktoren.

Die Kommunikation von der gemeinsamen Zentraleinheit zu den Aktoren über die gemeinsame zweite geschützte Verbindung ist relativ problemlos. Denn in Abweichung zur üblichen Vorgehensweise bei audiovisuellen Streams existieren zwar mehr als zwei Beteiligte. Von den Beteiligten speist aber nur ein einziger Beteiligter, nämlich die gemeinsame Zentraleinheit, Daten in die zweite geschützte Verbindung ein. Die gemeinsame Zentraleinheit kann daher sequenziell nacheinander die Steuersignale an die Aktoren ausgeben. Jeder Aktor kann mithören und aus den über die zweite gemeinsame geschützte Verbindung übertragenen Daten die für ihn bestimmten Steuersignale herausfiltern.

Bezüglich der Kommunikation von den Sensoren zu der gemeinsamen Zentraleinheit "weiß" jedoch ebenso wie im Stand der Technik keiner der Sensoren, dass auch die anderen Sensoren die jeweils von ihnen erfassten Istzustände über die gemeinsame erste geschützte Verbindung an die Zentraleinheit übermitteln. Um zu gewährleisten, dass es nicht zu zeitlichen Konflikten bei der Übermittlung der Istzustände an die gemeinsame Zentraleinheit kommt, wird daher jedem beteiligten Sensor innerhalb des Zeitfensters der jeweilige senderseitige Teilbereich zugeordnet, innerhalb dessen der jeweilige Sensor die von ihm erfassten Istzustände dem ersten offenen Kommunikationsnetz zuführt. Dadurch kann gewährleistet werden, dass die übermittelten Istzustände sequenziell nacheinander bei der Zentraleinheit eintreffen.

Um für die Datenübertragung über die erste geschützte Verbindung die senderseitigen Teilbereiche korrekt zu ermitteln, hat es sich als vorteilhaft erwiesen,
- dass für die Sensoren der jeweilige senderseitige Teilbereich innerhalb des Zeitfensters zunächst vorläufig angesetzt wird,
- dass sodann für jeden senderseitigen Teilbereich ermittelt wird, welcher empfängerseitige Teilbereich auf Seiten der gemeinsamen Zentraleinheit mit dem jeweiligen senderseitigen Teilbereich korrespondiert, und
- dass schließlich die senderseitigen Teilbereiche innerhalb des Zeitfensters derart verschoben werden, dass die empfängerseitigen Teilbereiche zueinander disjunkt sind.

In der Regel wird hierbei zusätzlich ein gewisser Sicherheitsabstand der empfängerseitigen Teilbereiche voneinander eingehalten. Dies ist jedoch nicht zwingend erforderlich.

Die Kommunikation von dem jeweiligen Sensor zur gemeinsamen Zentraleinheit erfolgt über eine jeweilige Sequenz von sequenziell aufeinanderfolgenden Leitungsabschnitten des ersten offenen Kommunikationsnetzes. Hierbei sind unmittelbar aneinander angrenzende Leitungsabschnitte der jeweiligen Sequenz über jeweils einen Knotenpunkt (eine sogenannte Bridge) miteinander verbunden. Jeder Knotenpunkt leitet die von dem jeweiligen Sensor übermittelten Istzustände mit einer jeweiligen Verzögerungszeit weiter. Jeder Knotenpunkt gewährleistet weiterhin für jede geschützte Verbindung, an der er beteiligt ist, dass die Verzögerungszeit, mit der er die von ihm empfangenen Daten weiterleitet, zwischen einem für den jeweiligen Knotenpunkt vorbestimmten Minimalwert und einem für den jeweiligen Knotenpunkt vorbestimmten Maximalwert liegt. Dies gilt für jede geschützte Verbindung und damit auch die erste geschützte Verbindung des ersten Kommunikationsnetzes. Ausgehend von dem dem jeweiligen Sensor zugeordneten senderseitigen Teilbereich, ist es somit möglich, durch Aufaddieren der vorbestimmten Minimalwerte der Knotenpunkte einen frühestmöglichen Zeitpunkt zu ermitteln, zu dem die entsprechenden Istzustände frühestens bei der gemeinsamen Zentraleinheit eintreffen können. In analoger Weise ist es, ausgehend von dem dem jeweiligen Sensor zugeordneten senderseitigen Teilbereich möglich, durch Aufaddieren der vorbestimmten Maximalwerte der Knotenpunkte einen spätestmöglichen Zeitpunkt zu ermitteln, zu dem die entsprechenden Istzustände spätestens bei der gemeinsamen Zentraleinheit eintreffen können. Der jeweilige empfängerseitige Teilbereich ist somit durch den frühestmöglichen Zeitpunkt und den spätestmöglichen Zeitpunkt bestimmt. Wenn später der senderseitige Teilbereich verschoben wird, verschiebt sich der korrespondierende empfängerseitige Teilbereich 1:1 mit dieser Verschiebung. Wenn also beispielsweise der senderseitige Teilbereich um 50 µs vorverlegt wird, verschiebt sich auch der korrespondierende empfängerseitige Teilbereich um 50 µs nach vorne.

Die Maximalwerte der Knotenpunkte müssen zwingend explizit gegeben sein. Die Minimalwerte können explizit gegeben sein. Alternativ ist es möglich, dass die vorbestimmten Minimalwerte zu Null gesetzt werden.

In aller Regel weisen das erste offene Kommunikationsnetz und das zweite offene Kommunikationsnetz mindestens einen gemeinsamen Leitungsabschnitt auf, über den sowohl die Übermittlung der Istzustände an die gemeinsame Zentraleinheit als auch die Übermittlung der Steuersignale an die Aktoren erfolgt. Insbesondere ist oftmals nur ein einziges Ethernet als (gemeinsames) Kommunikationsnetz gegeben, an das die gemeinsame Zentraleinheit einmal (1x) angeschlossen ist, so dass über diese Verbindung zwangsweise alle Kommunikationen der gemeinsamen Zentraleinheit mit den Sensoren und den Aktoren erfolgen müssen.

Die Aufgabe wird weiterhin durch ein Steuerungssystem mit den Merkmalen des Anspruchs 6 gelöst. Erfindungsgemäß wird ein Steuerungssystem der eingangs genannten Art dadurch ausgestaltet,
- dass die Sensoren und die gemeinsame Zentraleinheit über ein erstes offenes Kommunikationsnetz miteinander verbunden sind,
- dass die gemeinsame Zentraleinheit und die Aktoren über ein zweites offenes Kommunikationsnetz miteinander verbunden sind und
- dass die Sensoren, die gemeinsame Zentraleinheit, die Aktoren, das erste offene Kommunikationsnetz und das zweite offene Kommunikationsnetz derart ausgebildet sind, dass sie im Betrieb gemäß einem Steuerverfahren nach einem der obigen Ansprüche miteinander zusammenwirken.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein Steuerungssystem und einen industriellen technischen Prozess,
- FIG 2: ein Zeitdiagramm,
- FIG 3: eine geschützte Verbindung,
- FIG 4: ein Datenpaket,
- FIG 5: eine weitere geschützte Verbindung,
- FIG 6: ein weiteres Datenpaket,
- FIG 7 bis 11: Zeitdiagramme, und
- FIG 12: ein Steuerungssystem.

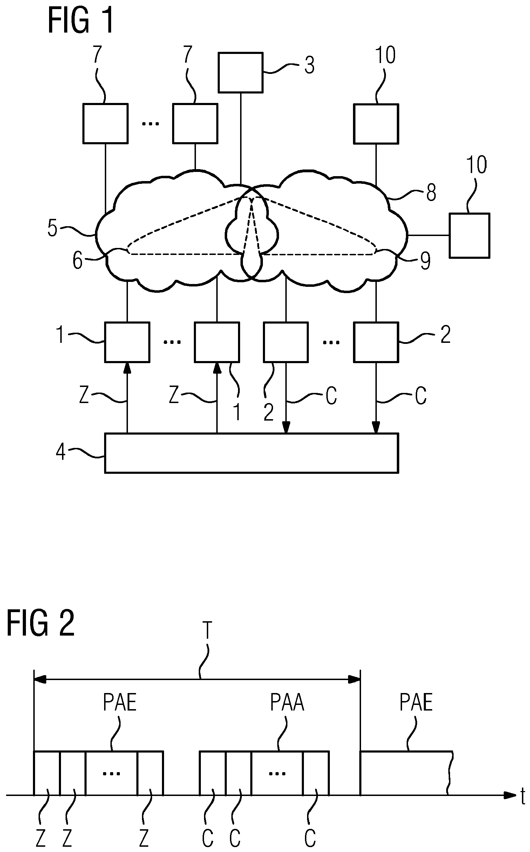

Gemäß FIG 1 weist ein Steuerungssystem eine Mehrzahl von Sensoren 1, eine Mehrzahl von Aktoren 2 und eine gemeinsame Zentraleinheit 3 auf. Bei der Zentraleinheit 3 kann es sich beispielsweise eine speicherprogrammierbare Steuerung oder um eine Zentraleinheit einer speicherprogrammierbaren Steuerung handeln. Die Sensoren 1 und die Aktoren 2 sind Peripheriegeräte.

Die Sensoren 1 erfassen zyklisch Istzustände Z eines industriellen technischen Prozesses 4, beispielsweise einer Produktionsmaschine oder eines chemischen Prozesses. Die Istzustände Z können beispielsweise Positionssignale, Temperaturen, binäre Signale wie beispielsweise das Ansprechen eines Endschalters usw. sein. Nachfolgend wird davon ausgegangen, dass jeder Sensor 1 einen einzelnen Istzustand Z erfasst. Die Sensoren 1 könnten jedoch auch jeweils mehrere Istzustände Z erfassen.

Die Sensoren 1 und die Zentraleinheit 3 sind über ein erstes offenes Kommunikationsnetz 5 miteinander verbunden. Innerhalb des ersten offenen Kommunikationsnetzes 5 übermitteln die Sensoren 1 die von ihnen erfassten Istzustände Z über eine erste geschützte Verbindung 6 an die Zentraleinheit 3. Die erste geschützte Verbindung 6 ist für die Sensoren 1 gemeinsam.

Das Kommunikationsnetz 5 ist deshalb ein offenes Kommunikationsnetz, weil an das Kommunikationsnetz 5 auch andere Komponenten 7 angeschlossen sein können, die eigenständig von den Istzuständen Z verschiedene Daten über das Kommunikationsnetz 5 übertragen können. Es ist möglich, dass die anderen Komponenten 7 nur untereinander, aber weder mit der Zentraleinheit 3 noch mit den Sensoren 1 kommunizieren. Es ist jedoch ebenso möglich, dass die anderen Komponenten 7 auch mit der Zentraleinheit 3 und/oder mit den Sensoren 1 kommunizieren. In diesem Fall erfolgt die Kommunikation jedoch außerhalb des erfindungsgemäßen Steuerverfahrens. Das erste offene Kommunikationsnetz 5 kann beispielsweise als Ethernet ausgebildet sein.

Die erste geschützte Verbindung 6 ist eine geschützte Verbindung, weil durch die Art der Verbindung 6 gewährleistet ist, dass Daten, die von den Sensoren 1 über die erste geschützte Verbindung 6 an die Zentraleinheit 3 übermittelt werden, binnen einer vorbestimmten maximalen Latenzzeit bei der Zentraleinheit 3 eintreffen. Zwischen dem Einspeisen der Daten - hier des von dem jeweiligen Sensor 1 erfassten jeweiligen Istzustands Z - in das erste offene Kommunikationsnetz 5 durch einen der Sensoren 1 und dem Eintreffen dieser Daten bei der Zentraleinheit 3 vergeht also maximal die Latenzzeit. Die Latenzzeit kann von Sensor 1 zu Sensor 1 verschieden sein. Sie ist aber für jeden Sensor 1 gegeben. Ein Beispiel einer geschützten Verbindung 6 ist ein Stream, wie er beispielsweise von der AVB (= Audio/Video Bridging) Task Group und insbesondere von der TSN (= Time-Sensitive Networking) Task Group in der internationalen Norm IEEE 802.1 festgelegt ist.

Ein Stream ist in der Regel zwischen einem einzelnen Sender (Talker) und einem einzelnen Empfänger (Listener) definiert. Im vorliegenden Fall sind jedoch mehrere Sender vorhanden, nämlich die Sensoren 1. Es ist jedoch bekannt, einen Stream auch zwischen mehreren Sendern und einem einzelnen Empfänger (hier der Zentraleinheit 3) einzurichten. Rein beispielhaft kann auf die PCT/EP2017/055643, eingereicht am 10.03.2017, Anmelderin Siemens AG, verwiesen werden. Weitere Details zum Einrichten werden später noch erläutert werden.

Das Übermitteln der Istzustände Z an die Zentraleinheit 3 erfolgt, ebenso wie das Erfassen der Istzustände Z durch die Sensoren 1, zyklisch. Innerhalb eines vorbestimmten Zeitfensters T übermittelt somit entsprechend der Darstellung in FIG 2 jeder Sensor 1 die von ihm erfassten Istzustände Z einmal (1x) an die Zentraleinheit 3. Die Gesamtheit der Istzustände Z bildet das sogenannte Prozessabbild der Eingänge PAE.

Die Zentraleinheit 3 ermittelt in an sich bekannter Art und Weise zyklisch Steuersignale C für den industriellen technischen Prozess 4. Die Zentraleinheit 3 berücksichtigt hierbei die an sie übermittelten Istzustände Z und gegebenenfalls weitere, interne Daten wie beispielsweise Merker und Timer. Die entsprechende Vorgehensweise ist für speicherprogrammierbare Steuerungen allgemein bekannt. Die Steuersignale C können beispielsweise ein Einschalten oder ein Ausschalten einer Heizung, eines Stellmotors, einer Lampe usw. bewirken. Es kann sich um ein binäre Signale, um diskrete Signale oder um analoge Signale handeln. Letztere werden von der Zentraleinheit 3 in digitaler Form ermittelt und an die Aktoren 2 übermittelt. Sie werden erst nach der Übermittlung an die Aktoren 2 von der digitalen in die analoge Form umgewandelt.

Die Zentraleinheit 3 und die Aktoren 2 sind - analog zu der Verbindung der Zentraleinheit 3 und der Sensoren 1 - über ein zweites offenes Kommunikationsnetz 8 miteinander verbunden. Innerhalb des zweiten offenen Kommunikationsnetzes 8 übermittelt die Zentraleinheit 3 die von ihr ermittelten Steuersignale C über eine zweite geschützte Verbindung 9 an die Aktoren 2. Die zweite geschützte Verbindung 9 ist für die Aktoren 2 gemeinsam. Die Gesamtheit der Steuersignale C bildet das sogenannte Prozessabbild der Ausgänge PAA. Nachfolgend wird davon ausgegangen, dass die Zentraleinheit 3 für jeden Aktor 2 ein einzelnes Steuersignal C ermittelt. Die Zentraleinheit 3 könnte jedoch auch für die Aktoren 2 jeweils mehrere Steuersignale C ermitteln.

Das Kommunikationsnetz 8 ist deshalb ein offenes Kommunikationsnetz, weil an das Kommunikationsnetz 8 auch andere Komponenten 10 angeschlossen sein können, die eigenständig von den Steuersignalen C verschiedene Daten über das zweite offene Kommunikationsnetz 8 übertragen können. Es ist möglich, dass die anderen Komponenten 10 nur untereinander, aber weder mit der Zentraleinheit 3 noch mit den Aktoren 2 kommunizieren. Es ist jedoch ebenso möglich, dass die anderen Komponenten 10 auch mit der Zentraleinheit 3 und/oder mit den Aktoren 2 kommunizieren. In diesem Fall erfolgt die Kommunikation jedoch außerhalb des erfindungsgemäßen Steuerverfahrens. Das zweite offene Kommunikationsnetz 8 kann analog zum Kommunikationsnetz 5 beispielsweise als Ethernet ausgebildet sein.

Die zweite geschützte Verbindung 9 ist eine geschützte Verbindung, weil durch die Art der Verbindung 9 gewährleistet ist, dass Daten, die von der Zentraleinheit 3 über die zweite geschützte Verbindung 9 an die Aktoren 2 übermittelt werden, binnen einer vorbestimmten maximalen Latenzzeit bei den Aktoren 2 eintreffen. Zwischen dem Einspeisen der Daten - hier des für den jeweiligen Aktor 2 bestimmten jeweiligen Steuersignals C - in das zweite offene Kommunikationsnetz 8 durch die Zentraleinheit 3 und dem Eintreffen dieser Daten bei dem jeweiligen Aktor 2 vergeht also maximal die Latenzzeit. Die Latenzzeit kann von Aktor 2 zu Aktor 2 verschieden sein. Sie ist aber für jeden Aktor 2 gegeben.

Ein Beispiel einer geschützten Verbindung 9 ist - wie zuvor - ein Stream, wie er von der Audio/Video Bridging Task Group und insbesondere von der Time-Sensitive Networking Task Group in der internationalen Norm IEEE 802.1 festgelegt ist. Analog zum Einrichten eines Streams zwischen zwischen mehreren Sendern und einem einzelnen Empfänger ist es auch bekannt, einen Stream zwischen einem einzelnen Sender (hier der Zentraleinheit 3) und mehreren Empfängern (hier den Aktoren 2) einzurichten. Dies entspricht dem Standard-Prinzip, wie es von der AVB Task Group und insbesondere von der TSN Task Group in der Norm IEEE 802.1 festgelegt ist.

Das Übermitteln der Steuersignale C an die Aktoren 2 erfolgt zyklisch. Innerhalb des vorbestimmten Zeitfensters T übermittelt somit entsprechend der Darstellung in FIG 2 die Zentraleinheit 3 an jeden Aktor 2 einmal (1x) das für den jeweiligen Aktor 2 bestimmte Steuersignal C. Die Aktoren 2 wirken sodann entsprechend den an sie übermittelten Steuersignalen C auf den industriellen technischen Prozess 4 ein. Auch das Einwirken auf den industriellen technischen Prozess 4 erfolgt zyklisch.

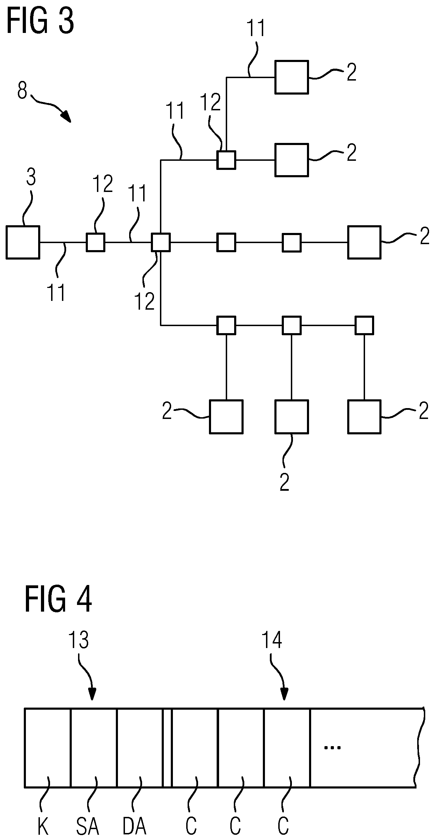

Nachstehend wird die Einrichtung der zweiten geschützten Verbindung 9 erläutert. Hierbei wird angenommen, dass die logische oder physikalische Struktur des zweiten offenen Kommunikationsnetzes 8, soweit es die Zentraleinheit 3 und die Aktoren 2 betrifft, so wie in FIG 3 dargestellt ist. Die Topologie des zweiten offenen Kommunikationsnetzes 8 kann jedoch ebenso auch anders sein. Insbesondere muss sie nicht vorab bekannt sein.

Gemäß FIG 3 ist jeder Aktor 2 über eine jeweilige Sequenz von Leitungsabschnitten 11 des zweiten offenen Kommunikationsnetzes 8 mit der Zentraleinheit 3 verbunden. Über die jeweilige Sequenz erfolgt die Kommunikation von der Zentraleinheit 3 zum jeweiligen Aktor 2. Unmittelbar aneinander angrenzende Leitungsabschnitte 11 sind über jeweils einen Knotenpunkt 12 miteinander verbunden. Die Bezugszeichen 11 und 12 sind in FIG 3 nur für den Pfad von der Zentraleinheit 3 zu einem der Aktoren 2 eingezeichnet.

Die Knotenpunkte 12 - bei einem Stream üblicherweise als Bridges bezeichnet - leiten die von ihnen erhaltenen Daten weiter. Bei einer ungeschützten Verbindung ist die hierbei auftretende Verzögerung nicht vorbestimmt. Bei einer geschützten Verbindung - hier der zweiten geschützten Verbindung 9 - leiten die Knotenpunkte 12 die von ihnen erhaltenen Daten mit einer jeweiligen maximalen Verzögerungszeit weiter. Die Knotenpunkte 12 können dies gewährleisten, weil beim Einrichten der zweiten geschützten Verbindung 9 jeder beteiligte Knotenpunkt 12 prüft, ob seine internen Ressourcen für die im Rahmen der einzurichtenden geschützten Verbindung geforderte Performance (insbesondere bezüglich Datenmenge und Datendurchsatz) ausreichen. Wenn dies der Fall ist, reserviert der jeweilige Knotenpunkt 12 diese Ressourcen für die einzurichtende geschützte Verbindung. Andernfalls erfolgt eine entsprechende Mitteilung an eine die geschützte Verbindung einrichtende Einrichtung. Die geschützte Verbindung wird in diesem Fall nicht eingerichtet. Aufgrund dieser Vorgehensweise kann jeder beteiligte Knotenpunkt 12 gewährleisten, die geforderte Performance beim späteren Betrieb einzuhalten.

Beim späteren Betrieb ist zwar nicht vorab bekannt, mit welcher tatsächlichen Verzögerungszeit der jeweilige Knotenpunkt 12 die von der Zentraleinheit 3 in die zweite geschützte Verbindung 9 eingespeisten Steuersignale C weiterleitet. Die maximale Verzögerungszeit (also deren Maximalwert) bleibt jedoch gewährleistet. Es kann im Einzelfall weiterhin möglich sein, dass der jeweilige Knotenpunkt 12 auch eine minimale Verzögerungszeit spezifizieren kann. Alternativ kann angenommen werden, dass die minimale Verzögerungszeit (also deren Minimalwert) den Wert Null aufweist.

Die Datenübertragung über die zweite geschützte Verbindung 9 erfolgt in Form von einzelnen Datenpaketen (frames), die gemäß FIG 4 einen Header 13 und Nutzdaten 14 umfassen. Die Steuersignale C sind Bestandteile der Nutzdaten 14. Der Header 13 umfasst zum einen eine Kennung K für die zweite geschützte Verbindung 9 als solche und zum anderen eine logische Quelladresse SA und eine logische Zieladresse DA. Zum Einrichten der zweiten geschützten Verbindung 9 ist es somit insbesondere erforderlich, dass jedem Aktor 2 ein und dieselbe logische Zieladresse DA zugeordnet wird. Im Ergebnis übermittelt die Zentraleinheit 2 somit in der zweiten geschützten Verbindung 9 an jeden Aktor 2 alle Steuersignale C. Damit ist jeder Aktor 2 in der Lage, die für ihn relevanten Steuersignale C herauszufiltern und zu verwenden. Zeitliche Konflikte zwischen den einzelnen Steuersignalen C können bei dieser Vorgehensweise nicht auftreten, da nur ein einziger Sender (die Zentraleinheit 3) vorhanden ist und die Zentraleinheit 3 demzufolge die Wurzel der zweiten geschützten Verbindung 9 ist.

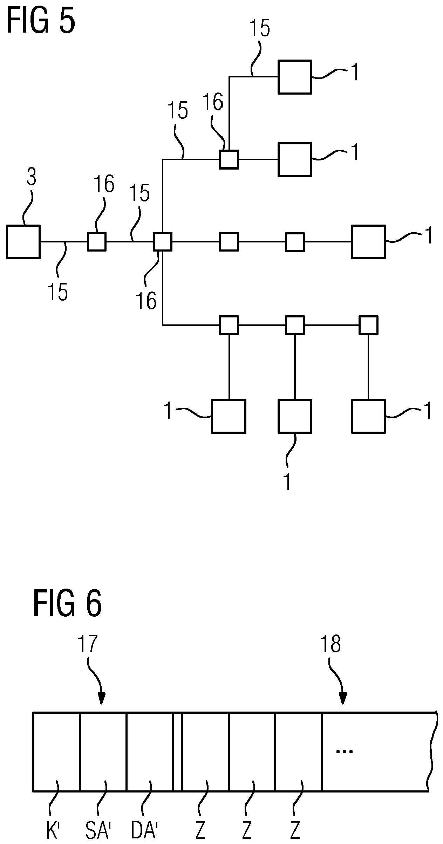

Nachstehend wird die Einrichtung der ersten geschützten Verbindung 6 erläutert. Hierbei wird angenommen, dass die logische oder physikalische Struktur des ersten offenen Kommunikationsnetzes 5, soweit es die Zentraleinheit 3 und die Sensoren 1 betrifft, so wie in FIG 5 dargestellt ist. Die Topologie des ersten offenen Kommunikationsnetzes 5 kann jedoch ebenso auch anders sein. Die Topologie des ersten offenen Kommunikationsnetzes 5 kann jedoch ebenso auch anders sein. Insbesondere muss sie nicht vorab bekannt sein.

Entsprechend der Darstellung in FIG 5 ist die Topologie des ersten offenen Kommunikationsnetzes 5 ähnlich zur Topologie des zweiten offenen Kommunikationsnetzes 8. Dies ist jedoch nicht zwingend erforderlich.

Gemäß FIG 5 ist jeder Sensor 1 über eine Sequenz von Leitungsabschnitten 15 des ersten offenen Kommunikationsnetzes 5 mit der Zentraleinheit 3 verbunden. Über die jeweilige Sequenz erfolgt die Kommunikation von den Sensoren 1 zur Zentraleinheit 3. Unmittelbar aneinander angrenzende Leitungsabschnitte 15 sind über jeweils einen Knotenpunkt 16 miteinander verbunden. Die Bezugszeichen 15 und 16 sind in FIG 5 nur für den Pfad von einem der Sensoren 1 zur Zentraleinheit 2 eingezeichnet.

Die Knotenpunkte 16 - bei einem Stream üblicherweise als Bridges bezeichnet - leiten die von ihnen erhaltenen Daten weiter. Bei einer ungeschützten Verbindung ist die hierbei auftretende Verzögerung nicht vorbestimmt. Bei einer geschützten Verbindung - hier der ersten geschützten Verbindung 6 - leiten die Knotenpunkte 16 die von ihnen erhaltenen Daten mit einer jeweiligen maximalen Verzögerungszeit weiter. Die Knotenpunkte 16 können dies gewährleisten, weil beim Einrichten der ersten geschützten Verbindung 6 jeder beteiligte Knotenpunkt 16 prüft, ob seine internen Ressourcen für die im Rahmen der einzurichtenden geschützten Verbindung geforderte Performance (insbesondere bezüglich Datenmenge und Datendurchsatz) ausreichen. Wenn dies der Fall ist, reserviert der jeweilige Knotenpunkt 16 diese Ressourcen. Andernfalls erfolgt eine entsprechende Mitteilung an eine die geschützte Verbindung einrichtende Einrichtung. Die geschützte Verbindung wird in diesem Fall nicht eingerichtet. Aufgrund dieser Vorgehensweise kann jeder beteiligte Knotenpunkt 16 gewährleisten, die geforderte Performance beim späteren Betrieb einzuhalten.

Beim späteren Betrieb ist zwar nicht vorab bekannt, mit welcher tatsächlichen Verzögerungszeit der jeweilige Knotenpunkt 16 die von dem jeweiligen Sensor 1 in die erste geschützte Verbindung 6 eingespeisten Istzustände Z weiterleitet. Die maximale Verzögerungszeit (also deren Maximalwert) bleibt jedoch gewährleistet. Es kann im Einzelfall weiterhin möglich sein, dass der jeweilige Knotenpunkt 16 auch eine minimale Verzögerungszeit spezifizieren kann. Alternativ kann angenommen werden, dass die minimale Verzögerungszeit (also deren Minimalwert) den Wert Null aufweist.

Die Datenübertragung über die erste geschützte Verbindung 6 erfolgt auf die gleiche Weise wie über die zweite geschützte Verbindung 9. Die Übertragung erfolgt also in Form von einzelnen Datenpaketen (frames), die gemäß FIG 6 einen Header 17 und Nutzdaten 18 umfassen. Die Istzustände C sind Bestandteile der Nutzdaten 18. Der Header 17 umfasst zum einen eine Kennung K' für die erste geschützte Verbindung 6 als solche und zum anderen eine logische Quelladresse SA' und eine logische Zieladresse DA'. Zum Einrichten der ersten geschützten Verbindung 9 ist es möglich, dass jedem Sensor 1 ein und dieselbe logische Quelladresse SA' zugeordnet wird. Es ist jedoch ebenso möglich, dass den Sensoren 1 verschiedene logische Quelladressen SA' zugeordnet werden. In beiden Fällen übermitteln die Sensoren 1 in der ersten geschützten Verbindung 6 an die Zentraleinheit 3 alle Istzustände Z.

Im Gegensatz zur zweiten geschützten Verbindung 9 gibt es bei der ersten geschützten Verbindung 6 mehrere Sender, nämlich die Sensoren 1. Die Sensoren 1 "wissen" jedoch nichts voneinander. Wenn den Sensoren 1 daher lediglich vorgegeben ist, innerhalb des Zeitfensters T über die erste geschützte Verbindung 6 ihre jeweiligen Istzustände Z an die Zentraleinheit 3 zu übermitteln, kann es geschehen, dass Istzustände Z, die von verschiedenen Sensoren 1 an die Zentraleinheit 3 übermittelt werden, bei der Zentraleinheit 3 oder einem der Knotenpunkte 16 gleichzeitig eintreffen, so dass sie von der Zentraleinheit 3 bzw. dem entsprechenden Knotenpunkt 16 nicht entgegengenommen werden können. In diesem Fall träte ein Datenverlust ein.

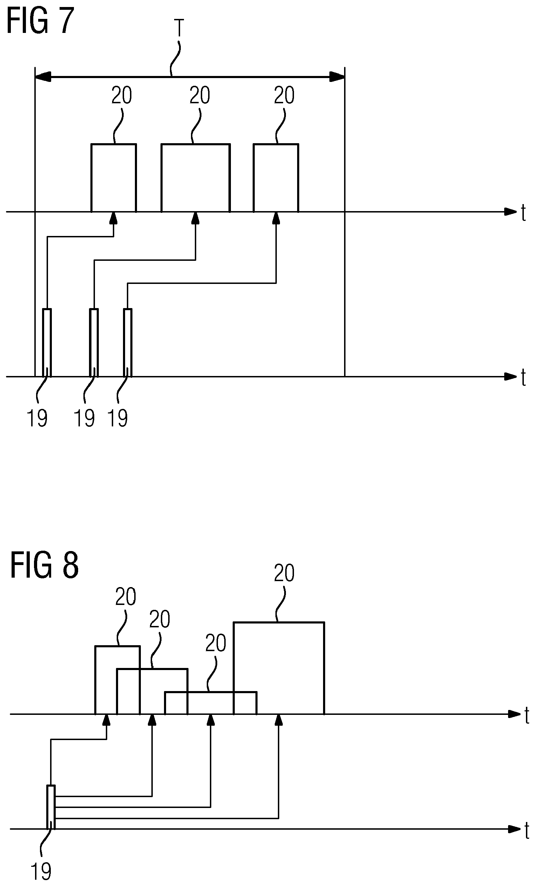

Zur Vermeidung derartiger zeitlicher Konflikte bei der Übermittlung der Istzustände Z an die Zentraleinheit 3 ist entsprechend der Darstellung in FIG 7 innerhalb des Zeitfensters T jedem Sensor 1 ein jeweiliger senderseitiger Teilbereich 19 zugeordnet. Der Sensor 1 führt die von ihm erfassten Istzustände Z innerhalb des ihm zugeordneten Teilbereichs 19 dem ersten offenen Kommunikationsnetz 5 zu. Der jeweilige Teilbereich 19 bezieht sich also nicht auf die gesamte Übermittlung von dem jeweiligen Sensor 1 zur Zentraleinheit 3, sondern nur auf das erste Glied in der Übertragungskette, d.h. das Einspeisen in den an den jeweiligen Sensor 1 angrenzenden Leitungsabschnitt 15. Die Möglichkeit der Zuordnung von senderseitigen Teilbereichen 19 zu einem bestimmten Sender (hier den Sensoren 1) ist als solche bekannt. Rein beispielhaft kann erneut auf die internationale Norm IEEE 802.1 und insbesondere auf die Erweiterungen in IEEE 802.1 Qcc verwiesen werden. Entsprechende Vorgehensweisen sind auch aus PROFINET IRT bekannt.

Mit den senderseitigen Teilbereich 19 korrespondieren empfängerseitige Teilbereich 20. Die empfängerseitigen Teilbereiche 20 sind diejenigen Zeitbereiche, innerhalb derer die von einem der Sensoren 1 in dessen senderseitigem Teilbereich 19 in das erste offene Kommunikationsnetz 9 eingespeisten Istzustände Z bei der Zentraleinheit 3 eintreffen. Die empfängerseitigen Teilbereiche 20 müssen zueinander disjunkt sein. Um dies zu gewährleisten, wird für jeden Sensor 1 der jeweilige senderseitige Teilbereich 19 zunächst nur vorläufig angesetzt. Für diesen vorläufigen Ansatz - aber nur für diesen - können die senderseitigen Teilbereiche 19 sogar entsprechend der Darstellung in FIG 8 übereinstimmen. Sodann wird für jeden senderseitigen Teilbereich 19 ermittelt, welcher empfängerseitige Teilbereich 20 auf Seiten der Zentraleinheit 3 mit dem jeweiligen senderseitigen Teilbereich 19 korrespondiert. FIG 8 zeigt auch die korrespondierenden empfängerseitigen Teilbereiche 20. Die empfängerseitigen Teilbereiche 20 sind in FIG 8 unterschiedlich hoch dargestellt, um sie trotz ihrer zeitlichen Überlappung in FIG 8 als solche erkennen und voneinander unterscheiden zu können.

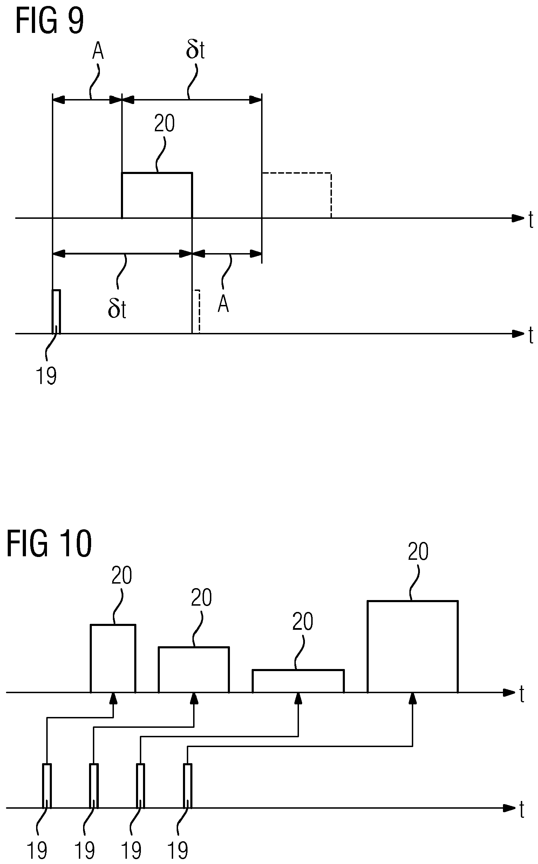

Von entscheidender Bedeutung ist nun, dass gemäß FIG 9 für jeden senderseitigen Teilbereich 19 der zeitliche Versatz A zum korrespondierenden empfängerseitigen Teilbereich 20 konstant ist. Wenn also entsprechend der gestrichelten Darstellung in FIG 9 ein senderseitiger Teilbereich 19 um eine bestimmte Zeitspanne δt verschoben wird, verschiebt sich auch der korrespondierende empfängerseitige Teilbereich 20 um genau diese Zeitspanne δt. Der zeitliche Versatz A wird also unverändert beibehalten. Es ist daher möglich, entsprechend der Darstellung in FIG 8 zunächst für beliebig angesetzte senderseitigen Teilbereiche 19 die zugehörigen empfängerseitigen Teilbereiche 20 zu ermitteln und sodann die empfängerseitigen Teilbereiche 20 entsprechend der Darstellung in FIG 10 innerhalb des Zeitfensters T derart anzuordnen, dass sie zueinander disjunkt sind. Vorzugsweise wird zwischen den empfängerseitigen Teilbereiche 20 ein Sicherheitsabstand eingehalten. Dies ist jedoch nicht zwingend erforderlich.

Die zugehörigen zeitlichen Verschiebungen können ohne weiteres ermittelt werden. Aufgrund des Umstands, dass der zeitliche Versatz A zum jeweils korrespondierenden senderseitigen Teilbereich 19 sich nicht ändert, können somit ohne weiteres auch die korrespondierenden senderseitigen Teilbereiche 19 ermittelt werden. Es ist lediglich erforderlich, die senderseitigen Teilbereiche 19 1:1 zur zeitlichen Verschiebung des jeweiligen empfängerseitigen Teilbereichs 20 zu verschieben.

Es ist möglich, dass die senderseitigen Teilbereiche 19 sich nach dem Verschieben zeitlich überlappen. Dies ist jedoch unkritisch, da es nicht auf eine etwaige Überlappung der senderseitigen Teilbereiche 19 ankommt, sondern nur auf die Vermeidung einer Überlappung der empfängerseitigen Teilbereiche 20.

Um die obenstehend erläuterte Vorgehensweise zu implementieren, müssen die empfängerseitigen Teilbereiche 20 bekannt sein. Die Ermittlung des empfängerseitigen Teilbereichs 20 wird nachfolgend für einen einzelnen senderseitigen Teilbereich 19 erläutert. Die Vorgehensweise ist jedoch in völlig analoger Weise für alle senderseitigen Teilbereiche 19 gültig.

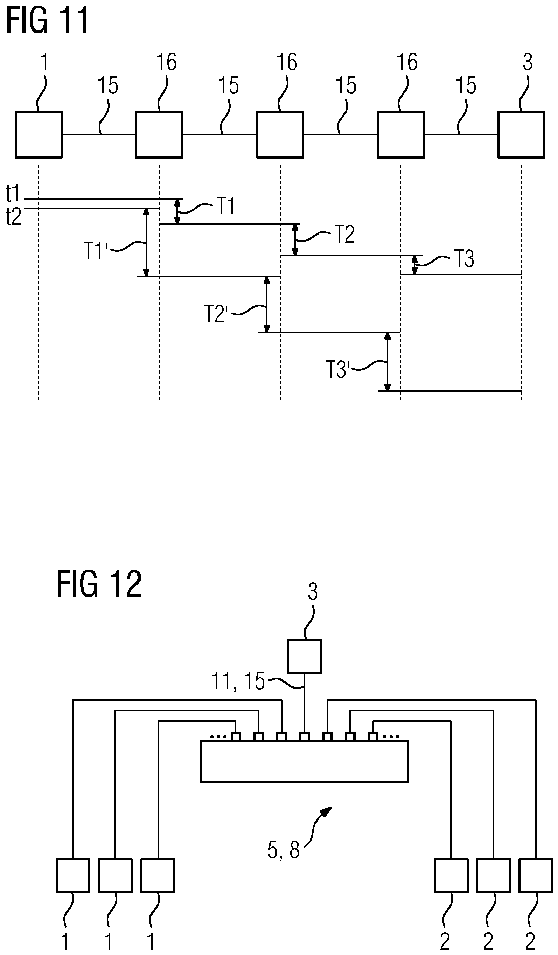

Nachfolgend wird entsprechend der Darstellung in FIG 11 - rein beispielhaft - angenommen, dass der entsprechende Sensor 1 über vier sequentiell aufeinanderfolgende Leitungsabschnitte 15 und hiermit korrespondierend über drei zwischen je zwei dieser vier Leitungsabschnitte 15 angeordnete Knotenpunkte 16 mit der Zentraleinheit 3 verbunden ist. Weiterhin wird angenommen, dass die Übertragungszeiten über die Leitungsabschnitte 15 als solche vernachlässigt werden können. Gegebenenfalls können derartige Übertragungszeiten jedoch mit berücksichtigt werden.

Der betrachtete Sensor 1 führt die von ihm erfassten Istzustände Z innerhalb des Zeitfensters T in dem ihm zugeordneten Teilbereich 19 dem ersten offenen Kommunikationsnetz 5 zu. Die Grenzen dieses Teilbereich 19 werden nachfolgend mit den Bezugszeichen t1 und t2 versehen. Die Differenz der beiden Grenzen, also t2-t1, entspricht der Dauer des entsprechenden senderseitigen Teilbereichs 19.

Aufgrund der Vernachlässigung der Übertragungszeiten über die Leitungsabschnitte 15 als solche treffen die übermittelten Istzustände Z im gleichen Zeitraum - also in dem sich von t1 bis t2 erstreckenden Intervall - bei dem an den Sensor 1 angrenzenden Knotenpunkt 16 ein. Dieser Knotenpunkt 16 führt die Istzustände Z nach einer Verzögerungszeit dem nächsten Leitungsabschnitt 15 zu. Der genaue Wert der Verzögerungszeit ist nicht bekannt. Es ist jedoch bekannt, dass die Verzögerungszeit minimal einen Wert T1 und maximal einen Wert T1' aufweist.

Der frühestmögliche Zeitpunkt, zu dem dieser Knotenpunkt 16 die Istzustände Z dem nächsten Leitungsabschnitt 15 zuführt, liegt demzufolge bei t1+T1. Der spätestmögliche Zeitpunkt, zu dem dieser Knotenpunkt 16 das Zuführen der Istzustände Z zu dem nächsten Leitungsabschnitt 15 beendet, liegt demzufolge weiterhin bei t2+T1'.

Aufgrund der Vernachlässigung der Übertragungszeiten über die Leitungsabschnitte 15 als solche treffen die übermittelten Istzustände Z im gleichen Zeitraum - also in dem sich von t1+T1 bis t2+T1' erstreckenden Intervall - bei dem nächsten Knotenpunkt 16 ein. Dieser Knotenpunkt 16 führt die Istzustände Z ebenfalls nach einer Verzögerungszeit dem von ihm aus gesehen nächsten Leitungsabschnitt 15 zu. Der genaue Wert der Verzögerungszeit ist wieder nicht bekannt. Es ist jedoch bekannt, dass die Verzögerungszeit minimal einen Wert T2 und maximal einen Wert T2' aufweist.

Der frühestmögliche Zeitpunkt, zu dem dieser Knotenpunkt 16 die Istzustände Z dem nächsten Leitungsabschnitt 15 zuführt, liegt demzufolge bei t1+T1+T2. Der spätestmögliche Zeitpunkt, zu dem dieser Knotenpunkt 16 das Zuführen der Istzustände Z zu dem nächsten Leitungsabschnitt 15 beendet, liegt demzufolge weiterhin bei t2+T1'+T2'.

Diese Vorgehensweise kann für jeden Knotenpunkt 16 wiederholt werden. In dem gegebenen Beispiel, bei dem zwischen dem Sensor 1 und der Zentraleinheit 3 drei Knotenpunkte 16 angeordnet sind, ergibt sich somit der frühestmögliche Zeitpunkt, zu dem die Istzustände Z des betrachteten Sensors 1 bei der Zentraleinheit 3 eintreffen, zu t1+T1+T2+T3, wobei T3 die minimale Verzögerungszeit des an die Zentraleinheit 3 angrenzenden Knotenpunkts 16 ist. In analoger Weise ergibt sich der spätestmögliche Zeitpunkt, zu dem die Übermittlung der Istzustände Z des betrachteten Sensors 1 an die Zentraleinheit 3 beendet ist, der Zeitpunkt t1+T1'+T2'+T3', wobei T3' die maximale Verzögerungszeit des an die Zentraleinheit 3 angrenzenden Knotenpunkts 16 ist.

Im Ergebnis lässt sich somit für jeden Sensor 1 und dessen senderseitigen Teilbereich 19 der jeweilige empfängerseitige Teilbereich 20, ausgehend von dem dem jeweiligen Sensor 1 zugeordneten senderseitigen Teilbereich 19, durch Aufaddieren der vorbestimmten Minimalwerte T1, T2, T3 usw. der Knotenpunkte 16 und Aufaddieren der vorbestimmten Maximalwerte T1', T2', T3' usw. der Knotenpunkte 16 ermitteln.

Die Ermittlung der senderseitigen Teilbereiche 19 erfolgt automatisiert über ein P2P-Protokoll, beispielsweise auf der Basis von LRP (= link local reservation protocoll). Nach der Ermittlung der senderseitigen Teilbereiche 19 werden diese an die einzelnen Sensoren 1 übermittelt, beispielsweise zwar über das erste offene Kommunikationsnetz 5, aber außerhalb der ersten geschützten Verbindung 6.

Die Anzahl an Datenpaketen, die pro Zeitfenster T über das erste offene Kommunikationsnetz 5 und hier über die erste geschützte Verbindung 6 von den Sensoren 1 zur Zentraleinheit 3 übermittelt werden, ist in der Regel so groß wie die Anzahl an Sensoren 1. Dies ist deshalb der Fall, weil jeder Sensor 1 die von ihm erfassten Istzustände Z über ein eigenes Datenpaket an die Zentraleinheit 3 übermittelt. Die Ressourcen der beteiligten Knotenpunkte 16 des ersten offenen Kommunikationsnetzes 5, müssen daher im Rahmen der Einrichtung der ersten geschützten Verbindung 6 derart bestimmt werden, dass sie innerhalb der jeweils spezifizierten maximalen Verzögerungszeit Ti' (mit i = 1, 2, 3 usw.) die entsprechende Anzahl an Datenpaketen weiterleiten können.

Zumindest der unmittelbar an die Zentraleinheit 3 angrenzenden Knotenpunkt 16 des ersten offenen Kommunikationsnetzes 5 muss in der Regel alle von den Sensoren 1 übermittelten Datenpakete handhaben können, also unabhängig davon, von welchem Sensor 1 das entsprechende Datenpaket stammt. Bezüglich der anderen Knotenpunkte 16 des ersten offenen Kommunikationsnetzes 5 kann es ausreichen, deren Ressourcen in einem reduzierten Umfang für die erste geschützte Verbindung 6 zu reservieren.

Für die Einhaltung der senderseitigen Teilbereiche 19 durch die Sensoren 1 ist es weiterhin erforderlich, dass die Sensoren 1 miteinander synchronisiert sind. Die Synchronisation als solche ist jedoch nicht Gegenstand der vorliegenden Erfindung. Möglichkeiten zur Synchronisierung sind Fachleuten auch allgemein bekannt. Sie müssen an dieser Stelle daher nicht detailliert erläutert werden.

Soweit obenstehend erläutert, sind das erste offene Kommunikationsnetz 5 und das zweite offene Kommunikationsnetz 8 voneinander verschiedene Kommunikationsnetze. Dies ist jedoch nicht zwingend erforderlich. Vielmehr können das erste offene Kommunikationsnetz 5 und das zweite offene Kommunikationsnetz 8 entsprechend der Darstellung in FIG 12 mindestens einen gemeinsamen Leitungsabschnitt 11, 15 aufweisen, über den sowohl die Übermittlung der Istzustände Z an die Zentraleinheit 3 als auch die Übermittlung der Steuersignale C an die Aktoren 2 erfolgt. Insbesondere ist in der Regel die Zentraleinheit 1 nur über einen einzigen Leitungsabschnitt 11, 15 an die beiden offenen Kommunikationsnetze 5, 8 angeschlossen. Auch weitere Leitungsabschnitte 11, 15 können Bestandteil beider offenen Kommunikationsnetze 5, 18 sein. Weiterhin ist es auch möglich, dass Peripherieeinheiten vorhanden sind, die sowohl die Funktionalität eines Sensors 1 als auch die Funktionalität eines Aktors 2 umfassen (sogenannte gemischte I/O- Einheiten). In diesem Fall ergibt sich ganz von selbst die Übermittlung sowohl der Istzustände Z zur Zentraleinheit 3 als auch der Steuersignale C von der Zentraleinheit 3 über dieselben Leitungsabschnitte 11, 15.

Zusammengefasst betrifft die vorliegende Erfindung somit folgenden Sachverhalt:

Sensoren 1 eines Steuerungssystems erfassen zyklisch Istzustände Z eines industriellen technischen Prozesses 4 und übermitteln sie über eine den Sensoren 1 gemeinsame erste geschützte Verbindung 6 eines ersten offenen Kommunikationsnetzes 5 an eine gemeinsame Zentraleinheit 3 des Steuerungssystems. Dadurch übermittelt innerhalb eines vorbestimmten Zeitfensters T jeder Sensor 1 die von ihm erfassten Istzustände Z einmal an die Zentraleinheit 3. Die Zentraleinheit 3 ermittelt unter Berücksichtigung der an sie übermittelten Istzustände Z zyklisch Steuersignale C für den industriellen technischen Prozess 4 und übermittelt sie über eine mehreren Aktoren 2 des Steuerungssystems gemeinsame zweite geschützte Verbindung 9 eines zweiten offenen Kommunikationsnetzes 8 an die Aktoren 2. Die Zentraleinheit 3 übermittelt dadurch innerhalb des vorbestimmten Zeitfensters T an jeden Aktor 2 einmal die für den jeweiligen Aktor 2 bestimmten Steuersignale C. Die Aktoren 2 wirken zyklisch entsprechend den an sie übermittelten Steuersignalen C auf den industriellen technischen Prozess 4 ein. Zur Vermeidung von zeitlichen Konflikten bei der Übermittlung der Istzustände Z an die Zentraleinheit 3 ist jedem Sensor 1 innerhalb des Zeitfensters T ein jeweiliger senderseitiger Teilbereich 19 zugeordnet, innerhalb dessen der jeweilige Sensor 19 die von ihm erfassten Istzustände Z dem ersten offenen Kommunikationsnetz 5 zuführt.

Die vorliegende Erfindung weist viele Vorteile auf. Insbesondere erfolgt eine effiziente und zuverlässige und auch deterministische Kommunikation zwischen den Sensoren 1, der Zentraleinheit 3 und den Aktoren 2 des Steuerungssystems. Bei einer in der Praxis realistischen Tiefe der Kommunikationsnetze 5, 8 von bis zu sieben Knotenpunkten 12, 16 treten meist Verzögerungszeiten zwischen dem Zuführen von Istzuständen Z bzw. Steuersignal C zum Kommunikationsnetz 5, 8 und deren Eintreffen bei der Zentraleinheit 3 bzw. bei den Aktoren 2 von wenigen Millisekunden (meist maximal 5 ms) auf. Ressourcen in den Knotenpunkten 12, 16 können geschont werden. Insbesondere müssen im Reservierungsprotokoll und der data plane des ersten und des zweiten offenen Kommunikationsnetze 5, 8 nur jeweils ein Eintrag für die beiden geschützten Verbindungen 6, 9 verwaltet werden. In einem Fehlerfall vereinfacht sich die Diagnose, da in beiden Kommunikationsrichtungen - zur Zentraleinheit 3 hin und von der Zentraleinheit 3 weg - jeweils nur eine einzelne geschützte Verbindung 6, 9 geprüft werden muss. Wissen über die Topologie der Kommunikationsnetze 5, 8 ist nicht erforderlich. Es ist lediglich in denjenigen Knotenpunkten 16, über welche die Istzustände Z mehrerer Sensoren 1 weitergeleitet werden, eine entsprechende Reservierung an Ressourcen der entsprechenden Knotenpunkte 16 erforderlich.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Steuerverfahren für einen industriellen technischen Prozess (4),
- wobei Sensoren (1) eines Steuerungssystems zyklisch Istzustände (Z) des industriellen technischen Prozesses (4) erfassen und über eine den Sensoren (1) gemeinsame erste geschützte Verbindung (6) eines ersten offenen Kommunikationsnetzes (5) an eine gemeinsame Zentraleinheit (3) des Steuerungssystems übermitteln, so dass innerhalb eines vorbestimmten Zeitfensters (T) jeder Sensor (1) die von ihm erfassten Istzustände (Z) einmal an die gemeinsame Zentraleinheit (3) übermittelt,
- wobei die gemeinsame Zentraleinheit (3) unter Berücksichtigung der an sie übermittelten Istzustände (Z) zyklisch Steuersignale (C) für den industriellen technischen Prozess (4) ermittelt und über eine mehreren Aktoren (2) des Steuerungssystems gemeinsame zweite geschützte Verbindung (9) eines zweiten offenen Kommunikationsnetzes (8) an die Aktoren (2) übermittelt, so dass die gemeinsame Zentraleinheit (3) innerhalb des vorbestimmten Zeitfensters (T) an jeden Aktor (2) einmal die für den jeweiligen Aktor (2) bestimmten Steuersignale (C) übermittelt,
- wobei die Aktoren (2) zyklisch entsprechend den an sie übermittelten Steuersignalen (C) auf den industriellen technischen Prozess (4) einwirken,
- wobei zur Vermeidung von zeitlichen Konflikten bei der Übermittlung der Istzustände (Z) an die gemeinsame Zentraleinheit (3) jedem Sensor (1) innerhalb des Zeitfensters (T) ein jeweiliger senderseitiger Teilbereich (19) zugeordnet ist, innerhalb dessen der jeweilige Sensor (19) die von ihm erfassten Istzustände (Z) dem ersten offenen Kommunikationsnetz (5) zuführt.

2. Steuerverfahren nach Anspruch 1,
**dadurch gekennzeichnet,**
- **dass** zur Ermittlung der senderseitigen Teilbereiche (19) für die Sensoren (1) der jeweilige senderseitige Teilbereich (19) innerhalb des Zeitfensters (T) zunächst vorläufig angesetzt wird,
- **dass** sodann für jeden senderseitigen Teilbereich (19) ermittelt wird, welcher empfängerseitige Teilbereich (20) auf Seiten der gemeinsamen Zentraleinheit (3) mit dem jeweiligen senderseitigen Teilbereich (19) korrespondiert, und
- **dass** schließlich die senderseitigen Teilbereiche (19) innerhalb des Zeitfensters (T) derart verschoben werden, dass die empfängerseitigen Teilbereiche (20) zueinander disjunkt sind.

3. Steuerverfahren nach Anspruch 2,
**dadurch gekennzeichnet,**
- **dass** die Kommunikation von dem jeweiligen Sensor (1) zur gemeinsamen Zentraleinheit (3) über eine jeweilige Sequenz von sequenziell aufeinanderfolgenden Leitungsabschnitten (15) des ersten offenen Kommunikationsnetzes (5) erfolgt,
- **dass** unmittelbar aneinander angrenzende Leitungsabschnitte (15) der jeweiligen Sequenz über jeweils einen Knotenpunkt (16) miteinander verbunden sind,
- **dass** jeder Knotenpunkt (16) die von dem jeweiligen Sensor (1) übermittelten Istzustände (Z) mit einer jeweiligen Verzögerungszeit weiterleitet,
- **dass** die Verzögerungszeit des jeweiligen Knotenpunkts (16) zwischen einem für den jeweiligen Knotenpunkt (16) vorbestimmten Minimalwert (T1, T2, T3) und einem für den jeweiligen Knotenpunkt (16) vorbestimmten Maximalwert (T1', T2', T3') liegt und
- **dass** der jeweilige empfängerseitige Teilbereich (20), ausgehend von dem dem jeweiligen Sensor (1) zugeordneten senderseitigen Teilbereich (19), durch Aufaddieren der vorbestimmten Minimalwerte (T1, T2, T3) der Knotenpunkte (16) und Aufaddieren der vorbestimmten Maximalwerte (T1', T2', T3') der Knotenpunkte (16) ermittelt wird.

4. Steuerverfahren nach Anspruch 3,
**dadurch gekennzeichnet, dass** die vorbestimmten Minimalwerte (T1, T2, T3) zu Null gesetzt werden.

5. Steuerverfahren nach einem der obigen Ansprüche,
**dadurch gekennzeichnet, dass** das erste offene Kommunikationsnetz (5) und das zweite offene Kommunikationsnetz (8) mindestens einen gemeinsamen Leitungsabschnitt (11,15) aufweisen, über den sowohl die Übermittlung der Istzustände (Z) an die gemeinsame Zentraleinheit (3) als auch die Übermittlung der Steuersignale (C) an die Aktoren (2) erfolgt.

6. Steuerungssystem für einen industriellen technischen Prozess,
- wobei das Steuerungssystem eine Mehrzahl von Sensoren (1), eine Mehrzahl von Aktoren (2) und eine gemeinsame Zentraleinheit (3) aufweist,
- wobei die Sensoren (1) und die gemeinsame Zentraleinheit (3) über ein erstes offenes Kommunikationsnetz (5) miteinander verbunden sind,
- wobei die gemeinsame Zentraleinheit (3) und die Aktoren (2) über ein zweites offenes Kommunikationsnetz (8) miteinander verbunden sind,
- wobei die Sensoren (1), die gemeinsame Zentraleinheit (3), die Aktoren (2), das erste offene Kommunikationsnetz (5) und das zweite offene Kommunikationsnetz (8) derart ausgebildet sind, dass sie im Betrieb gemäß einem Steuerverfahren nach einem der obigen Ansprüche miteinander zusammenwirken.
